# EUROPÄISCHE PATENTSCHRIFT

(11) **EP 3 168 199 B1**
(45) Veröffentlichungstag und Bekanntmachung des Hinweises auf die Patenterteilung: **13.04.2022**
(21) Anmeldenummer: 15194120.0
(22) Anmeldetag: 11.11.2015
(51) Int. Cl.: C03C 3/095, C03C 3/112, C03C 4/00, C03C 4/02, C03C 4/12, C03C 10/00, A61C 13/083

(54) **VERFAHREN ZUR HERSTELLUNG VON GLÄSERN UND GLASKERAMIKEN MIT SIO2 ALS HAUPTKRISTALLPHASE**
METHOD FOR MAKING GLASSES AND GLASS CERAMICS WITH SIO2 AS MAIN CRYSTAL PHASE
PROCEDE DE FABRICATION DE VERRES ET DE VITROCERAMIQUE A L'AIDE DE SIO2 EN TANT QUE PHASE CRISTALLINE PRINCIPALE

(43) Veröffentlichungstag der Anmeldung: 17.05.2017
(73) Patentinhaber: Ivoclar Vivadent AG, 9494 Schaan (LI)
(72) Erfinder: Rampf, Markus, 8853 Lachen (CH); Krolikowski, Sebastian, 8853 Lachen (CH); Ritzberger, Christian, 9472 Grabs (CH); Höland, Wolfram, 9494 Schaan (LI); Schweiger, Marcel, 7000 Chur (CH)
(74) Vertreter: Uexküll & Stolberg

(56) Entgegenhaltungen:
- EP-A1- 0 916 625
- EP-A1- 2 930 156
- EP-A1- 2 944 619
- WO-A1-2015/173394
- US-A- 5 804 520
- US-A1- 2003 099 062
- BEI ET AL: "Optical properties of Ce<3+>-doped oxide glasses and correlations with optical basicity", MATERIALS RESEARCH BULLETIN, ELSEVIER, KIDLINGTON, GB, Bd. 42, Nr. 7, 29. April 2007 (2007-04-29) , Seiten 1195-1200, XP022052727, ISSN: 0025-5408, DOI: 10.1016/J.MATERRESBULL.2006.10.020

## Beschreibung

Die vorliegende Erfindung betrifft ein Verfahren zur Herstellung eines Glases oder einer Glaskeramik, die Cer-Ionen enthalten und sich insbesondere zur Herstellung von Dentalrestaurationen eignen, deren Fluoreszenzeigenschaften weitgehend denen der natürlichen Zähne entsprechen. Die Erfindung betrifft auch ein Glas und eine Glaskeramik, die nach dem erfindungsgemäßen Verfahren erhältlich sind, und deren Verwendung als Dentalmaterial und insbesondere zur Herstellung dentaler Restaurationen.

Glaskeramiken mit quarz-ähnlichen Kristallen sind aus dem Stand der Technik bereits bekannt. Dabei handelt es sich üblicherweise um Glaskeramiken mit sogenannten Hochquarz-Mischkristallen. Diese Kristalle enthalten verschiedenartige Zusatzionen im SiO₂-Gerüst-silikat, die dieser besonderen Kristallart auch bei Raumtemperatur eine metastabile Existenz erlaubt. Wären diese Ionen nicht in der Glaskeramik enthalten, würde der bei hohen Temperaturen in der Glaskeramik gebildete Hochquarz sich bei 573°C in Tiefquarz umwandeln. Höland und Beall beschreiben, dass Glaskeramiken mit Kristallen in Hochquarzstruktur die besondere Eigenschaft der geringen Wärmeausdehnung oder sogar der Nullausdehnung in einem grossen Temperaturbereich besitzen ("Glass-Ceramic Technology" 2. Aufl., Wiley, 2012, 272-273). Üblicherweise werden für derartige Glaskeramiken lineare thermische Ausdehnungskoeffizienten (WAK) von kleiner als 1,5·10⁻⁶ K⁻¹ (im Temperaturbereich von 20 bis 700 °C) gemessen. Selbst Glaskeramiken mit einem negativen Ausdehnungskoeffizienten können mit Hilfe der Hochquarzstruktur bereitgestellt werden.

Weiter sind aus der EP 0 916 625 A1 Lithiumdisilikat-Glaskeramiken bekannt, die Lithiumdisilikat als Hauptkristallphase enthalten und aufgrund ihrer hohen Transluzenz und sehr guten mechanischen Eigenschaften besonders im Dentalbereich und dabei vornehmlich zur Herstellung von Kronen und Brücken Anwendung finden.

Aus W. Buchalla, "Comparative Fluorescence Spectroscopy Shows Differences in Non-Cavitated Enamel Lesions", Caries Res. 2005, 39, 150-156 ist bekannt, dass natürliche Zähne unter ultraviolettem Licht eine bläulich-weiße Fluoreszenz mit Wellenlängen im Bereich von 400 bis 650 nm zeigen.

Rukmani et al., J. Am. Ceram. Soc. 2007, 90, 706-711, beschreiben den Einfluss von V- und Mn-Färbemitteln auf das Kristallisationsverhalten und die optischen Eigenschaften von Ce-dotierten Lithiumdisilikat-Glaskeramiken. Zur Herstellung der Glaskeramiken wird eine Mischung aus den Ausgangsmaterialien SiO₂, ZrO₂, Li₂CO₃, K₂CO₃, MgCO₃ und Al (PO₃)₃ mit CeO₂, V₂O₅ und MnO₂ gemischt, die Mischung bei 1500°C in Platintiegeln geschmolzen, abgekühlt und anschließend in einem Röhrenofen unter Luftzufuhr mehreren Wärmebehandlungen unterzogen.

Es hat sich jedoch gezeigt, dass die aus dem Stand der Technik bekannten Glaskeramiken unzureichende Fluoreszenzeigenschaften aufweisen und insbesondere unter UV-Licht die Fluoreszenzeigenschaften des natürlichen Zahnmaterials nicht in ausreichendem Maße imitieren können. Dadurch werden aus solchen Glaskeramiken hergestellte Dentalrestaurationen insbesondere unter dem Einfluss von UV-Licht als Restaurationen erkennbar oder werden als Zahnlücken oder Defekte wahrgenommen.

Das Dokument US 5 804 520 A beschreibt Lithiumsilikat Glaskeramiken. Der Artikel BEI et. al.: "Optical properties of Ce 3+-doped oxide glasses and correlations with optical basicity",MATERIALS RESEARCH BULLETIN, ELSEVIER, KIDLINGTON, GB, Bd. 42, Nr. 7, 29. April 2007 (2007-04-29), Seiten 1195-1200, beschreibt optische Eigenschaften von Ce3+ dotierten oxidischen Gläsern.

Der Erfindung liegt die Aufgabe zugrunde, eine Glaskeramik bereit zu stellen, die neben einer hohen Festigkeit und einem hohen Wärmeausdehnungskoeffizienten auch eine mit dem natürlichen Zahnmaterial vergleichbare Fluoreszenz zeigt und zur Herstellung von dentalen Restaurationen geeignet ist, welche die Farb- und Fluoreszenzeigenschaften des natürlichen Zahnmaterials insbesondere auch unter UV-Licht weitgehend imitieren können. Die Glaskeramik soll weiter in einfacher Weise insbesondere durch maschinelle Bearbeitung zu dentalen Restaurationen verarbeitbar sein und sich damit ausgezeichnet als restauratives Dentalmaterial eignen. Dabei wäre es wünschenswert, wenn der Glaskeramik auch mittels Heißpressen die gewünschte Form gegeben werden könnte.

Diese Aufgabe wird erfindungsgemäß gelöst durch ein Verfahren zur Herstellung einer Glaskeramik mit SiO₂ als Hauptkristallphase oder eines Glases, das Keime für die Kristallisation von SiO₂ enthält, welches einen Schritt umfasst, bei dem eine Schmelze eines Ausgangsglases, das Cer-Ionen enthält, reduzierenden Bedingungen ausgesetzt wird.

Es hat sich überraschend gezeigt, dass das erfindungsgemäße Verfahren die Herstellung von Glaskeramiken und Gläsern ermöglicht, die gegenüber dem Stand der Technik verbesserte Fluoreszenzeigenschaften insbesondere unter Einwirkung von UV-Licht zeigen.

Ohne Beschränkung auf eine bestimmte Theorie wird angenommen, dass es in Glasschmelzen, die Cer-Ionen enthalten, zur Einstellung eines Gleichgewichtes zwischen Ce³⁺-Ionen und Ce⁴⁺-Ionen kommt. Weiter wird davon ausgegangen, dass die reduzierenden Bedingungen, denen das Ausgangsglas in dem erfindungsgemäßen Verfahren ausgesetzt wird, dieses Verhältnis zugunsten von Ce³⁺-Ionen verschiebt, welche aufgrund von 5d→4f-Übergängen eine Fluoreszenz im Wellenlängenbereich von 320 bis 500 nm zeigen. Diese Fluoreszenz ist in besonderer Weise geeignet, die Fluoreszenzeigenschaften des natürlichen Zahnmaterials zu imitieren.

In der Regel beinhaltet das erfindungsgemäße Verfahren, dass die Schmelze des Ausgangsglases mit mindestens einem reduzierenden Mittel umgesetzt wird. Als reduzierende Mittel kommen grundsätzlich alle Mittel in Frage, die unter den Bedingungen des erfindungsgemäßen Verfahrens zur Reduktion von Ce⁴⁺-Ionen zu Ce³⁺-Ionen in der Lage sind. Dabei sind solche reduzierenden Mittel bevorzugt, die nach der Reduktion rückstandsfrei aus der Glasschmelze entfernt werden können.

Insbesondere sind gasförmige reduzierende Mittel sowie reduzierende Mittel bevorzugt, die unter den Bedingungen des erfindungsgemäßen Verfahrens nach der Reduktion aus der Glasschmelze ausgebrannt werden. Beispiele für gasförmige reduzierende Mittel sind Gase, die Wasserstoff und bevorzugt Mischungen von Wasserstoff und Stickstoff enthalten. Beispiele für reduzierende Mittel sind ferner Stoffe, die mindestens ein oxidierbares Kohlenstoffatom enthalten, insbesondere Kohlenstoff, beispielsweise Graphit, organische Salze, Kohlenhydrate und Getreidemehle.

Gemäß einer bevorzugten Ausführungsform wird die Schmelze des Ausgangsglases aus einer glasbildenden Zusammensetzung gebildet, die SiO₂, Li₂O, gegebenenfalls Keimbildner, eine Cerverbindung und mindestens ein reduzierendes Mittel enthält. Dabei ist als das mindestens eine reduzierende Mittel eine Verbindung bevorzugt, die mindestens ein oxidierbares Kohlenstoffatom enthält und vorzugsweise aus der Gruppe bestehend aus organischen Salzen, Kohlenhydraten und Getreidemehlen ausgewählt ist. Beispiele für besonders geeignete organische Salze sind Acetylacetonate.

In einer besonders bevorzugten Ausführungsform wird als reduzierendes Mittel ein Ceracetylacetonat, insbesondere Cer(III)-acetylacetonat verwendet. Gemäß dieser Ausführungsform stellt die Cerverbindung zugleich das mindestens eine reduzierende Mittel dar.

Gemäß einer weiteren bevorzugten Ausführungsform ist das mindestens eine reduzierende Mittel ein reduzierendes Gas, wobei das Gas vorzugsweise Wasserstoff enthält und bevorzugt Wasserstoff und Stickstoff enthält. Besonders geeignet sind Mischungen von Wasserstoff und Stickstoff, die etwa 5 Vol.-% Wasserstoff enthalten und auch als Formiergas bezeichnet werden. Dabei kann das Ausmaß der Reduktion über die Menge des zugeführten Gases und insbesondere über die Flussrate und Dauer der Zuführung des Gases gesteuert werden. Vorzugsweise beträgt die Menge der wirksamen Komponente des reduzierenden Gases, vorzugsweise Wasserstoff, 0,05 bis 5 l/min, insbesondere 0,1 bis 1 l/min und bevorzugt 0,2 bis 0,5 l/min, für eine Dauer von 10 bis 180 min, insbesondere 20 bis 120 min und bevorzugt 30 bis 90 min.

Erfindungsgemäß ist es bevorzugt, dass das Ausgangsglas 0,1 bis 7,0 Gew.-%, insbesondere 0,5 bis 5,0 Gew.-% und bevorzugt 1,0 bis 4,0 Gew.-% Cer-Ionen, berechnet als CeO₂, enthält.

Gemäß einer besonders bevorzugten Ausführungsform wird die Schmelze des Ausgangsglases aus einer glasbildenden Zusammensetzung gebildet, die mindestens eine Cer(III)-Verbindung und mindestens eine Cer(IV)-Verbindung enthält. Dabei kann durch die Variation des Verhältnisses von Cer(III)-Verbindung zu Cer(IV)-Verbindung das Verhältnis von Ce³⁺-Ionen und Ce⁴⁺-Ionen in dem erhaltenen Glas oder der Glaskeramik zusätzlich eingestellt werden. Zudem bewirken Ce⁴⁺-Ionen eine Gelbfärbung des Glas- oder Glaskeramikmaterials. Somit wird eine besonders gute Imitation der Fluoreszenz- und Farbeigenschaften des natürlichen Zahnmaterials ermöglicht. In einer besonders bevorzugten Ausführungsform enthält die glasbildende Zusammensetzung 0,1 bis 5,0 Gew.-%, insbesondere 0,5 bis 3,0 und bevorzugt 1,5 bis 2,0 Gew.-% Cer(III)-Verbindung, berechnet als Ce₂O₃, und 0,1 bis 5,0 Gew.-%, insbesondere 0,5 bis 3,0 und bevorzugt 1,5 bis 2,0 Gew.-% Cer(IV)-Verbindung, berechnet als CeO₂. Es ist weiter bevorzugt, dass das Massenverhältnis von Cer(III)-Verbindung, berechnet als Ce₂O₃, zu Cer(IV)-Verbindung, berechnet als CeO₂, im Bereich von 5:1 bis 1:5, insbesondere 2:1 bis 1:2 und bevorzugt 1,25:1 bis 1:1,25 liegt.

In einer besonderen Ausführungsform enthält das Ausgangsglas ferner Terbium-Ionen. Bevorzugt enthält das Ausgangsglas 0,05 bis 2,0, insbesondere 0,1 bis 1,5, bevorzugt 0,2 bis 1,0 und besonders bevorzugt 0,3 bis 0,7 Gew.-% Terbium-Ionen, berechnet als Tb₄O₇. Es hat sich überraschend gezeigt, dass erfindungsgemäß durch Kombination von Cer-Ionen und Terbium-Ionen Gläser und Glaskeramiken erhalten werden können, deren Fluoreszenz- und Farbeigenschaften die des natürlichen Zahnmaterials besonders gut imitieren können. Besonders überraschend ist dabei, dass bei den erfindungsgemäßen Gläsern und Glaskeramiken die durch die Cer-Ionen hervorgerufene Fluoreszenz auch in Anwesenheit von Terbium-Ionen weitgehend bestehen bleibt, obwohl im Stand der Technik eine Verringerung oder gar Auslöschung der durch Cer-Ionen hervorgerufenen Fluoreszenz bei Anwesenheit von d-Elementen beobachtet wurde.

Das Ausgangsglas enthält ferner mindestens die zur Bildung einer SiO₂-Kristallphase erforderliche Komponente SiO₂.

Üblicherweise enthält das Ausgangsglas die folgenden Komponenten

| Komponente | Gew.-% |
|---|---|
| SiO₂ | 58,0 bis 92,0 |
| Li₂O | 2, 0 bis 10, 0 |

Eine aus diesem Ausgangsglas hergestellte Glaskeramik zeigt überraschenderweise eine vorteilhafte Kombination von für ein restauratives Dentalmaterial wünschenswerten mechanischen und optischen Eigenschaften und ihr kann zudem in einer für ein Dentalmaterial wünschenswerten Weise die gewünschte Form gegeben werden.

Bevorzugt enthält das Ausgangsglas 60,0 bis 90,0, vorzugsweise 70,0 bis 83,0 Gew.-% und besonders bevorzugt 71,0 bis 78,0 Gew.-% SiO₂.

Es ist weiter bevorzugt, dass das Ausgangsglas 2,8 bis 9,5, insbesondere 5,0 bis 9,0 und besonders bevorzugt 7,0 bis 7,8 Gew.-% Li₂O enthält. Li₂O dient der Verbesserung der Erschmelzbarkeit der Ausgangsgläser. Weiter fördert es zudem die Mobilität der Ionen in der Glasmatrix und es wird angenommen, dass sich dies positiv auf die Kristallisation von manchen Kristallphasen, z.B. von Tiefquarz und Lithiumsilikat, auswirkt.

Auch ist es bevorzugt, dass das Ausgangsglas neben Li₂O weiteres Alkalimetalloxid Me^{I}₂O in einer Menge 0 bis 13,0, insbesondere 1,0 bis 13,0 und besonders bevorzugt 2,0 bis 13,0 Gew.-% enthält. Der Begriff "weiteres Alkalimetalloxid Me^{I}₂O" bezeichnet Alkalimetalloxid mit Ausnahme von Li₂O, wobei dieses Me^{I}₂O insbesondere ausgewählt ist aus K₂O, Na₂O, Cs₂O und/oder Rb₂O. Besonders bevorzugt enthält das Ausgangsglas mindestens eines und insbesondere alle der folgenden weiteren Alkalimetalloxide Me^{I}₂O in den angegebenen Mengen:

| Komponente | Gew.-% |
|---|---|
| K₂O | 0 bis 5,0 |
| Na₂O | 0 bis 3,0 |
| Cs₂O | 0 bis 13,0 |
| Rb₂O | 0 bis 7,0. |

In einer besonders bevorzugten Ausführungsform enthält das Ausgangsglas 1,0 bis 4,0 Gew.-% K₂O.

Des Weiteren ist es bevorzugt, dass das Ausgangsglas 0 bis 11,0 und insbesondere 1,0 bis 7,0 Gew.-% Oxid zweiwertiger Elemente Me^{II}O enthält, wobei dieses Oxid Me^{II}O insbesondere ausgewählt ist aus MgO, CaO, SrO und/oder ZnO. Besonders bevorzugt enthält das Ausgangsglas mindestens eines und insbesondere alle der folgenden Oxide zweiwertiger Elemente Me^{II}O in den angegebenen Mengen:

| Komponente | Gew.-% |
|---|---|
| MgO | 0 bis 7,0 |
| CaO | 0 bis 4,5 |
| SrO | 0 bis 5,0 |
| ZnO | 0 bis 4,0. |

In einer besonders bevorzugten Ausführungsform enthält das Ausgangsglas 0,5 bis 7,0, bevorzugt 1,0 bis 5,0 und besonders bevorzugt 1,0 bis 3,0 Gew.-% MgO und/oder 1,0 bis 5,0, bevorzugt 1,0 bis 4,0 und besonders bevorzugt 2,0 bis 4,0 Gew.-% CaO.

Es ist weiter ein Ausgangsglas bevorzugt, das 0 bis 10,0 und insbesondere 2,0 bis 9,0 Gew.-% Oxid dreiwertiger Elemente Me^{III}₂O₃ enthält, wobei dieses Me^{III}₂O₃ insbesondere ausgewählt ist aus Al₂O₃, Y₂O₃, La₂O₃, B₂O₃, Ga₂O₃ und/oder In₂O₃. Besonders bevorzugt enthält das Ausgangsglas mindestens eines und insbesondere alle der folgenden Oxide dreiwertiger Elemente Me^{III}₂O₃ in den angegebenen Mengen:

| Komponente | Gew.-% |
|---|---|
| Al₂O₃ | 0 bis 8,0 |
| Y₂O₃ | 0 bis 4,0 |
| La₂O₃ | 0 bis 2, 0 |
| B₂O₃ | 0 bis 5,0 |
| Ga₂O₃ | 0 bis 2, 0 |
| In₂O₃ | 0 bis 1,0. |

In einer besonders bevorzugten Ausführungsform enthält das Ausgangsglas 1,0 bis 8,0, insbesondere 2, 0 bis 7,0 und bevorzugt 3,0 bis 6,0 Gew.-% Al₂O₃.

Ferner ist ein Ausgangsglas bevorzugt, das weiteres Oxid vierwertiger Elemente Me^{IV}O₂ in einer Menge 0 bis 21,0 Gew.-% enthält. Der Begriff "weiteres Oxid vierwertiger Elemente Me^{IV}O₂" bezeichnet vierwertige Oxide mit Ausnahme von SiO₂ und CeO₂, wobei dieses Me^{IV}O₂ insbesondere ausgewählt ist aus ZrO₂, GeO₂, TiO₂ und/oder SnO₂. Besonders bevorzugt enthält das Ausgangsglas mindestens eines und insbesondere alle der folgenden weiteren Oxide vierwertiger Elemente Me^{IV}O₂ in den angegebenen Mengen:

| Komponente | Gew.-% |
|---|---|
| ZrO₂ | 0 bis 11,0 |
| GeO₂ | 0 bis 21,0 |
| TiO₂ | 0 bis 5,0 |
| SnO₂ | 0 bis 3,0. |

In einer weiteren bevorzugten Ausführungsform enthält das Ausgangsglas 0 bis 7,0, insbesondere 0 bis 6,5, besonders bevorzugt 1,0 bis 6,5 und ganz besonders bevorzugt 2,0 bis 5,0 Gew.-% P₂O₅.

P₂O₅ kann als Keimbildner fungieren. Das Vorhandensein eines Keimbildners ist für die Bildung von SiO₂ als Hauptkristallphase jedoch nicht zwingend erforderlich.

Außerdem ist ein Ausgangsglas bevorzugt, das weiteres Oxid fünfwertiger Elemente Me^{V}₂O₅ in einer Menge 0 bis 6,0 und insbesondere 0 bis 5,0 Gew.-% enthält. Der Begriff "weiteres Oxid fünfwertiger Elemente Me^{V}₂O₅" bezeichnet fünfwertige Oxide mit Ausnahme von P₂O₅, wobei dieses Me^{V}₂O₅ insbesondere ausgewählt ist aus V₂O₅, Ta₂O₅ und/oder Nb₂O₅. Besonders bevorzugt enthält das Ausgangsglas mindestens eines und insbesondere alle der folgenden weiteren Oxide fünfwertiger Elemente Me^{V}₂O₅ in den angegebenen Mengen:

| Komponente | Gew.-% |
|---|---|
| V₂O₅ | 0 bis 6,0 |
| Ta₂O₅ | 0 bis 5,0 |
| Nb₂O₅ | 0 bis 5,0. |

Auch ist ein Ausgangsglas bevorzugt, die 0 bis 6,0 Gew.-% Oxid sechswertiger Elemente Me^{VI}O₃ enthält, wobei dieses Me^{VI}O₃ insbesondere ausgewählt ist aus WO₃ und/oder MoO₃. Besonders bevorzugt enthält das Ausgangsglas mindestens eines und insbesondere alle der folgenden Oxide Me^{VI}O₃ in den angegebenen Mengen:

| Komponente | Gew.-% |
|---|---|
| WO₃ | 0 bis 6,0 |
| MoO₃ | 0 bis 5,0. |

Weiterhin ist ein Ausgangsglas bevorzugt, die 0 bis 5,0 und insbesondere 0 bis 1,0 Gew.-% Fluor enthält.

Besonders bevorzugt ist ein Ausgangsglas, das mindestens eine und bevorzugt alle der folgenden Komponenten in den angegebenen Mengen enthält:

| Komponente | Gew.-% |
|---|---|
| SiO₂ | 58,0 bis 92,0 |
| Li₂O | 2, 0 bis 10, 0 |
| CeO₂ | 0,1 bis 7,0 |
| Tb₄O₇ | 0 bis 2,0 |
| Me^{I}₂O | 0 bis 13,0 |
| Me^{II}O | 0 bis 11,0 |
| Me^{III}₂O₃ | 0 bis 10, 0 |
| Me^{IV}O₂ | 0 bis 21,0 |
| P₂O₅ | 0 bis 7,0 |
| Me^{V}₂O₅ | 0 bis 6,0 |
| Me^{VI}O₃ | 0 bis 6,0 |
| Fluor | 0 bis 5,0, |

wobei Me^{I}₂O, Me^{II}O, Me^{III}₂O₃, Me^{IV}O₂, Me^{V}₂O₅ und Me^{VI}O₃ die oben angegebene Bedeutung haben.

In einer weiteren besonders bevorzugten Ausführungsform enthält das Ausgangsglas mindestens eine und bevorzugt alle der folgenden Komponenten:

| Komponente | Gew.-% |
|---|---|
| SiO₂ | 60,0 bis 90,0 |
| Li₂O | 2,8 bis 9,5 |
| CeO₂ | 0,5 bis 5,0 |
| Tb₄O₇ | 0,1 bis 1,5 |
| K₂O | 0 bis 5,0 |
| Na₂O | 0 bis 3,0 |
| Cs₂O | 0 bis 13,0 |
| Rb₂O | 0 bis 7,0 |
| MgO | 0 bis 7,0 |
| CaO | 0 bis 4,5 |
| SrO | 0 bis 5,0 |
| ZnO | 0 bis 4,0 |
| Al₂O₃ | 0 bis 8,0 |
| Y₂O₃ | 0 bis 4,0 |
| La₂O₃ | 0 bis 2,0 |
| B₂O₃ | 0 bis 5,0 |
| Ga₂O₃ | 0 bis 2,0 |
| In₂O₃ | 0 bis 1,0 |
| ZrO₂ | 0 bis 11,0 |
| GeO₂ | 0 bis 21,0 |
| TiO₂ | 0 bis 5,0 |
| SnO₂ | 0 bis 3,0 |
| P₂O₅ | 0 bis 6,5 |
| V₂O₅ | 0 bis 6,0 |
| Ta₂O₅ | 0 bis 5,0 |
| Nb₂O₅ | 0 bis 5,0 |
| WO₃ | 0 bis 6,0 |
| MoO₃ | 0 bis 5,0 |
| Fluor | 0 bis 1,0. |

Manche der vorstehend genannten Komponenten können als Färbemittel und/oder Fluoreszenzmittel dienen. Das Ausgangsglas kann darüber hinaus noch weitere Färbemittel und/oder Fluoreszenzmittel enthalten, die insbesondere aus anorganischen Pigmente und/oder Oxiden von d- und f-Elementen, wie z.B. den Oxiden von Sc, Mn, Fe, Co, Pr, Nd, Er, Dy, Gd, Eu und Yb, ausgewählt sein können. Als weitere Färbemittel können auch Metallkolloide, z.B. von Ag, Au und Pd, verwendet werden, die zusätzlich auch als Keimbildner fungieren können. Diese Metallkolloide können z.B. durch Reduktion von entsprechenden Oxiden, Chloriden oder Nitraten während der Schmelz- und Kristallisationsprozesse gebildet werden.

Die Bildung der Schmelze des Ausgangsglases erfolgt vorzugsweise bei Temperaturen von insbesondere 1500 bis 1800°C. Dabei wird insbesondere so vorgegangen, dass eine Mischung von geeigneten Ausgangsmaterialien, wie z.B. Carbonaten, Oxiden, Phosphaten und Fluoriden, bei Temperaturen von 1500 bis 1800°C für 0,5 bis 10 h erschmolzen wird. Im Falle der Verwendung eines Gases als reduzierendes Mittel wird die so erhaltene Glasschmelze mit dem Gas durchströmt. Anschließend kann die erhaltene Glasschmelze zur Erzielung einer besonders hohen Homogenität in Wasser gegossen werden, um ein Glasgranulat zu bilden, und das erhaltene Granulat dann erneut aufgeschmolzen werden.

Die Schmelze kann dann in Formen gegossen werden, um Rohlinge des Ausgangsglases, sogenannte Massivglasrohlinge oder monolithische Rohlinge, zu erzeugen. Üblicherweise werden diese monolithischen Rohlinge zunächst entspannt, z.B. indem sie 5 bis 120 min bei 450 bis 600°C gehalten werden. Diese Entspannung in dem angegebenen Temperaturbereich führt in der Regel zur Bildung von Keimen für die Kristallisation von SiO₂-Kristallphase und insbesondere von Tiefquarz-Kristallphase.

Es ist ebenfalls möglich, die Schmelze erneut in Wasser zu geben, um ein Granulat herzustellen. Dieses Granulat kann dann nach Mahlen und gegebenenfalls Zugabe weiterer Komponenten zu einem Rohling, einem sogenannten Pulverpressling, gepresst werden. Schließlich kann das Ausgangsglas nach Granulierung auch zu einem Pulver verarbeitet werden.

Es ist ebenfalls möglich, die Schmelze erneut in Wasser zu geben, um eine Fritte, d.h. ein Granulat, herzustellen. Diese Fritte kann nach Mahlen und gegebenenfalls Zugabe weiterer Komponenten, wie Bindemitteln und/oder Färbe- und Fluoreszenzmitteln, zu einem Rohling, einem sogenannten Pulverpressling, gepresst werden.

Schließlich kann das Ausgangsglas nach der Erzeugung einer Glasfritte auch zu einem Pulver verarbeitet werden.

Aus dem Ausgangsglas kann dann durch Wärmebehandlung das Glas mit Keimen erzeugt werden. Dies wird auch als Keimbildungsprozess bezeichnet.

In einer bevorzugten Ausführungsform zur Herstellung des Glases mit Keimen für die Kristallisation von SiO₂, insbesondere von Tiefquarz, wird das Ausgangsglas einer Wärmebehandlung bei einer Temperatur von 450 bis 600°C und insbesondere 500 bis 550°C für eine Dauer von insbesondere 5 bis 120 min und vorzugsweise 10 bis 40 min unterworfen.

Aus dem Glas mit Keimen kann dann durch Wärmebehandlung die erfindungsgemäße Glaskeramik gebildet werden.

In einer bevorzugten Ausführungsform zur Herstellung der erfindungsgemäßen Glaskeramik wird das Ausgangsglas oder insbesondere das Glas mit Keimen, mindestens einer Wärmebehandlung bei einer Temperatur von 700 bis 950°C für eine Dauer von insbesondere 5 bis 40 min und vorzugsweise 10 bis 30 min unterworfen.

Das Ausgangsglas oder das Glas mit Keimen kann z.B. in Form eines Massivglasrohlings oder eines Pulverpresslings der mindestens einen Wärmebehandlung unterzogen werden.

Die mindestens eine Wärmebehandlung kann auch im Rahmen eines Heißpressens, insbesondere eines Massivglasrohlings, oder im Rahmen eines Aufsinterns, insbesondere eines Pulvers, erfolgen.

Eine bevorzugte Ausführungsform zur Herstellung der erfindungsgemäßen Glaskeramik stellt somit ein Verfahren dar, bei dem
(a) Pulver des Ausgangsglases oder des Glases mit Keimen, gegebenenfalls nach Zugabe weiterer Komponenten, wie z.B. Presshilfsmittel, Färbemittel und/oder Fluoreszenzmittel, zu einem Pulverpressling gepresst wird, und
(b) der Pulverpressling einer Wärmebehandlung bei einer Temperatur von 700 bis 950°C für eine Dauer von insbesondere 5 bis 40 min unterworfen wird.

Eine weitere bevorzugte Ausführungsform zur Herstellung der erfindungsgemäßen Glaskeramik stellt ein Verfahren dar, bei dem
(a') Schmelze des Ausgangsglases zu einem Glasrohling geformt wird, insbesondere durch Gießen in eine Form, und
(b') der Glasrohling einer Wärmebehandlung bei einer Temperatur von 700 bis 900°C für eine Dauer von insbesondere 5 bis 40 min unterworfen wird.

In beiden bevorzugten Ausführungsformen des Verfahrens kann vor der Wärmebehandlung in Schritt (b) oder (b') eine weiter oben beschriebene Keimbildung vorgenommen werden.

Die Eigenschaften der Glaskeramik werden maßgeblich durch die Hauptkristallphase beeinflusst. Die erfindungsgemäße Glaskeramik enthält SiO₂ als Hauptkristallphase. In einer bevorzugten Ausführungsform enthält die erfindungsgemäße Glaskeramik Tiefquarz, Cristobalit oder eine Mischung von diesen, bevorzugt Tiefquarz oder Cristobalit und besonders bevorzugt Tiefquarz als Hauptkristallphase.

Mit dem Begriff "Hauptkristallphase" wird die Kristallphase bezeichnet, die von allen in der Glaskeramik vorhandenen Kristallphasen den höchsten Massenanteil hat. Die Bestimmung der Massen der Kristallphasen erfolgt dabei insbesondere mit der Rietveld-Methode. Ein geeignetes Verfahren zur quantitativen Analyse der Kristallphasen mittels der Rietveld-Methode ist z.B. in der Dissertation von M. Dittmer "Gläser und Glaskeramiken im System MgO-Al2O3-SiO2 mit ZrO2 als Keimbildner", Universität Jena 2011, beschrieben.

Es ist weiter bevorzugt, dass die erfindungsgemäße Glaskeramik 5,0 bis 50,0 und insbesondere 10,0 bis 30,0 Gew.-% SiO₂ als Kristallphase, insbesondere in Form von Tiefquarz, Cristobalit oder Mischungen von diesen, enthält.

Die erfindungsgemäße Glaskeramik kann zusätzlich zu SiO₂ als Hauptkristallphase noch weitere Kristallphasen, wie insbesondere Lithiumphosphat und/oder Lithiumsilikat enthalten. Ebenso können in der erfindungsgemäßen Glaskeramik auch noch weitere nanoskalige Phasen in amorpher oder kristalliner Form vorhanden sein.

Es ist bevorzugt, dass die erfindungsgemäße Glaskeramik 5,0 bis 30,0 und insbesondere 10,0 bis 25,0 Gew.-% Lithiumdisilikat enthält.

Die Art und die Menge der gebildeten Kristallphasen können insbesondere durch die Zusammensetzung des Ausgangsglases sowie die Wärmebehandlung gesteuert werden, die zur Herstellung der Glaskeramik aus dem Ausgangsglas angewendet wird. Die Beispiele veranschaulichen dies anhand der Variation der Zusammensetzung und der angewendeten Wärmebehandlung.

Die erfindungsgemäße Glaskeramik weist üblicherweise einen thermischen Ausdehnungskoeffizienten WAK (gemessen im Bereich von 100 bis 500°C) von mindestens 5,0·10⁻⁶ K⁻¹, bevorzugt 10, 0 bis 20,0·10⁻⁶ K⁻¹ und besonders bevorzugt 13,0 bis 18,0·10⁻⁶ K⁻¹ auf. Der WAK wird gemäß ISO 6872 (2008) bestimmt.

Die erfindungsgemäße Glaskeramik zeichnet sich durch eine sehr gute chemische Beständigkeit aus. Zur Bestimmung der chemischen Beständigkeit wurde die Glaskeramik gemäß ISO-Norm 6872 (2008) geprüft, indem der Masseverlust bei Lagerung in wässriger Essigsäure bestimmt wurde. Die erfindungsgemäße Glaskeramik zeigte dabei einen Masseverlust von vorzugsweise weniger als 30 µg/cm².

Ferner zeichnet sich die erfindungsgemäße Glaskeramik insbesondere durch mechanische Eigenschaften aus, die eine besonders einfache und schnelle maschinelle Bearbeitung gestatten, um die Glaskeramik z.B. in die Form einer Dentalrestauration zu bringen.

Die Glaskeramik weist eine biaxiale Bruchfestigkeit von vorzugsweise mindestens 200 MPa und besonders bevorzugt 200 bis 500 MPa auf. Die biaxiale Bruchfestigkeit wurde gemäß ISO 6872 (2008) (Kolben-auf-drei-Kugeln-Prüfung) bestimmt.

Die Transluzenz der Glaskeramik wurde in Form des Kontrastwerts (CR-Wert) gemäß British Standard BS 5612 bestimmt und er betrug vorzugsweise 35 bis 80.

Die Erfindung betrifft ferner ein Glas, das Keime für die Kristallisation von SiO₂ enthält, und eine Glaskeramik mit SiO₂ als Hauptkristallphase, die nach dem erfindungsgemäßen Verfahren erhältlich sind. Bevorzugte Ausführungsformen für das Glas mit zur Bildung von Kristallisation von SiO₂ geeigneten Keimen und die Glaskeramik mit SiO₂ als Hauptkristallphase ergeben sich aus den oben für das erfindungsgemäße Verfahren beschriebenen bevorzugten Ausführungsformen.

Die Erfindung betrifft ferner ein Glas, das Keime für die Kristallisation von SiO₂ enthält, und eine Glaskeramik mit SiO₂ als Hauptkristallphase, die eine Fluoreszenzintensität bei 420 nm und/oder im Wellenlängenbereich von 380 bis 460 nm (Fläche unter der Kurve) aufweisen, die mindestens das 1,5-fache, insbesondere mindestens das 2-fache, bevorzugt mindestens das 4-fache, besonders bevorzugt mindestens das 6-fache, der entsprechenden Fluoreszenzintensität einer Referenzprobe beträgt,
wobei die Referenzprobe dadurch erhältlich ist, dass ein Ausgangsglas mit der Zusammensetzung 74,3 Gew.-% SiO₂, 7,7 Gew.-% Li₂O, 3,4 Gew.-% K₂O, 1,8 Gew.-% MgO, 3,3 Gew.-% CaO, 4,0 Gew.-% Al₂O₃, 3,6 Gew.-% P₂O₅, 1,5 Gew.-% CeO₂ und 0,4 Gew.-% Tb₄O₇ im 200 g Maßstab aus geeigneten Rohstoffen in einem Platin-Rhodium-Tiegel bei 1650°C für 1 h erschmolzen wird, 30 g der Glasschmelze in eine vorgewärmte Form gegossen werden, um einen Glasblock zu erzeugen, und der Glasblock durch aufeinanderfolgende Temperaturbehandlungen bei 530°C für 20 min und 800°C für 30 min in eine Glaskeramik umgewandelt wird, wobei die Aufheizraten zwischen den Temperaturbehandlungen jeweils 30 K/min betragen.

Bevorzugt weisen das Glas und die Glaskeramik ferner eine Fluoreszenzintensität bei der Wellenlänge des Maximums des Übergangs ⁵D₄ → ⁷F₅ von Tb³⁺, insbesondere bei 541 nm, und/oder im Wellenlängenbereich von 535 bis 650 nm, vorzugsweise im Wellenlängenbereich von 535 bis 555 nm (Fläche unter der Kurve) auf, die mindestens das 1,5-fache, insbesondere mindestens das 2-fache, bevorzugt mindestens das 3-fache, besonders bevorzugt mindestens das 4-fache, der entsprechenden Fluoreszenzintensität einer Referenzprobe beträgt, wobei die Referenzprobe wie oben beschrieben erhältlich ist.

Besonders bevorzugt sind Gläser und Glaskeramiken, die eine Fluoreszenzintensität im Wellenlängenbereich von 375 bis 700 nm (Fläche unter der Kurve) aufweisen, die mindestens das 1,5-fache, insbesondere mindestens das 2-fache, bevorzugt mindestens das 3-fache, besonders bevorzugt mindestens das 4-fache, der entsprechenden Fluoreszenzintensität einer Referenzprobe beträgt, wobei die Referenzprobe wie oben beschrieben erhältlich ist.

Die Messung der Fluoreszenz erfolgt typischerweise an Plättchen mit den Abmessungen 17.9 mm x 15.9 mm x 2 mm, deren Oberfläche mit einer APEX-Schleifscheibe (0,5 µm) poliert wurde, mittels eines Fluoreszenz-Spektrometers vom Typ FL1039 (Horiba Jobin Yvon GmbH) mit einer 450 W Xenon-Lampe, einem Anregungsmonochromator (Spaltbreite 1 nm, Anregungswellenlänge 366 nm), einem Emissionsmonochromator (Spaltbreite 1,5 nm, Scanbereich 372 bis 700 nm, Inkrement 1 nm) und einem Photomultiplier-Detektor (Integrationszeit 1 s) vom Typ PMT 1424M (Horiba Jobin Yvon GmbH). Das Plättchen wird dabei typischerweise in einem Winkel von 30° zum Anregungsmonochromator platziert und die Emission in einem Winkel von 90° zum Anregungsmonochromator mit einem optischen 5% Neutral Density Filter gemessen.

Die Erfindung betrifft ferner ein Glas, das Keime für die Kristallisation von SiO₂ enthält, und eine Glaskeramik mit SiO₂ als Hauptkristallphase, die eine weißlich-blaue Fluoreszenzfarbe im CIE-Farbraum aufweisen.

Die erfindungsgemäßen Glaskeramiken und die erfindungsgemäßen Gläser liegen insbesondere in Form von Pulvern, Granulaten oder Rohlingen in beliebiger Form und Größe, z.B. monolithischen Rohlingen, wie Plättchen, Quadern oder Zylindern, oder Pulverpresslingen, in ungesinterter, teilgesinterter oder dichtgesinterter Form, vor. In diesen Formen können sie einfach weiterverarbeitet werden, z.B. zu dentalen Restaurationen. Sie können aber auch in Form von dentalen Restaurationen, wie Inlays, Onlays, Kronen, Veneers, Schalen oder Abutments, vorliegen.

Aus den erfindungsgemäßen Glaskeramiken und den erfindungsgemäßen Gläsern können dentale Restaurationen, wie Brücken, Inlays, Onlays, Kronen, Veneers, Schalen oder Abutments, hergestellt werden. Die Erfindung betrifft daher deren Verwendung als Dentalmaterial und insbesondere deren Verwendung zur Herstellung dentaler Restaurationen. Dabei ist es bevorzugt, dass der Glaskeramik oder dem Glas durch Verpressen oder maschinelle Bearbeitung die Form der gewünschten dentalen Restauration gegeben wird.

Das Verpressen erfolgt üblicherweise unter erhöhtem Druck und erhöhter Temperatur. Es ist bevorzugt, dass das Verpressen bei einer Temperatur von 700 bis 1200°C erfolgt. Weiter ist es bevorzugt, das Verpressen bei einem Druck von 10 bis 30 bar durchzuführen. Beim Verpressen wird durch viskoses Fließen des eingesetzten Materials die gewünschte Formänderung erreicht. Es können für das Verpressen das Ausgangsglas und das erfindungsgemäße Glas mit Keimen sowie bevorzugt die erfindungsgemäße Glaskeramik verwendet werden. Dabei können die erfindungsgemäßen Gläser und Glaskeramiken insbesondere in Form von Rohlingen in beliebiger Form und Größe, z.B. Massivrohlingen oder Pulverpresslingen, z.B. in ungesinterter, teilgesinterter oder dichtgesinterter Form, eingesetzt werden.

Die maschinelle Bearbeitung erfolgt üblicherweise durch materialabtragende Verfahren und insbesondere durch Fräsen und/oder Schleifen. Es ist besonders bevorzugt, dass die maschinelle Bearbeitung im Rahmen eines CAD/CAM-Verfahrens durchgeführt wird. Für die maschinelle Bearbeitung können das Ausgangsglas, das erfindungsgemäße Glas mit Keimen sowie die erfindungsgemäße Glaskeramik verwendet werden. Dabei können die erfindungsgemäßen Gläser und Glaskeramiken insbesondere in Form von Rohlingen, z.B. Massivrohlingen oder Pulverpresslingen, z.B. in ungesinterter, teilgesinterter oder dichtgesinterter Form, eingesetzt werden. Für die maschinelle Bearbeitung wird bevorzugt die erfindungsgemäße Glaskeramik verwendet. Die erfindungsgemäße Glaskeramik kann auch in einer noch nicht vollständig kristallisierten Form eingesetzt werden, die durch Wärmebehandlung bei niedrigerer Temperatur erzeugt wurde. Dies bietet den Vorteil, dass eine leichtere maschinelle Bearbeitung und damit der Einsatz von einfacheren Apparaten zur maschinellen Bearbeitung möglich sind. Nach der maschinellen Bearbeitung eines solchen teilkristallisierten Materials wird dieses regelmäßig einer weiteren Wärmebehandlung unterzogen, um eine weitere Kristallisation von SiO₂ als Kristallphase hervorzurufen.

Die erfindungsgemäßen Glaskeramiken und die erfindungsgemäßen Gläser eignen sich allerdings auch als Beschichtungsmaterial von z.B. Keramiken, Glaskeramiken und Metallen. Die Erfindung ist daher ebenfalls auf die Verwendung der erfindungsgemäßen Gläser oder der erfindungsgemäßen Glaskeramiken zur Beschichtung von insbesondere Keramiken, Glaskeramiken und Metallen gerichtet.

Die Erfindung betrifft auch ein Verfahren zur Beschichtung von Keramiken, Glaskeramiken und Metallen, bei dem erfindungsgemäße Glaskeramik oder erfindungsgemäßes Glas auf die Keramik, die Glaskeramik oder das Metall aufgebracht und einer Temperatur von mindestens 600°C ausgesetzt wird.

Dies kann insbesondere durch Aufsintern und bevorzugt durch Aufpressen erfolgen. Beim Aufsintern wird die Glaskeramik oder das Glas in üblicher Weise, z.B. als Pulver, auf das zu beschichtende Material, wie Keramik, Glaskeramik oder Metall, aufgebracht und anschließend gesintert. Bei dem bevorzugten Aufpressen wird erfindungsgemäße Glaskeramik oder erfindungsgemäßes Glas, z.B. in Form von Pulverpresslingen oder monolithischen Rohlingen, bei einer erhöhten Temperatur, von z.B. 700 bis 1200°C, und unter Anwendung von Druck, z.B. 10 bis 30 bar, aufgepresst. Hierzu können insbesondere die in der EP 231 773 beschriebenen Verfahren und der dort offenbarte Pressofen eingesetzt werden. Geeignete kommerzielle Öfen sind die Öfen vom Typ Programat von Ivoclar Vivadent AG, Liechtenstein.

Aufgrund der vorstehend geschilderten Eigenschaften der erfindungsgemäßen Glaskeramiken und der erfindungsgemäßen Gläser eignen sich diese insbesondere zum Einsatz in der Zahnheilkunde. Gegenstand der Erfindung ist daher auch die Verwendung der erfindungsgemäßen Glaskeramiken oder der erfindungsgemäßen Gläser als Dentalmaterial und insbesondere zur Herstellung dentaler Restaurationen oder als Beschichtungsmaterial für dentale Restaurationen, wie Kronen, Brücken und Abutments.

Die Erfindung betrifft mithin auch ein Verfahren zur Herstellung einer dentalen Restauration, insbesondere Brücke, Inlay, Onlay, Veneer, Abutment, Teilkrone, Krone oder Schale, bei dem der erfindungsgemäßen Glaskeramik oder dem erfindungsgemäßen Glas durch Verpressen, Sintern oder maschinelle Bearbeitung, insbesondere im Rahmen eines CAD/CAM-Verfahrens, die Form der gewünschten dentalen Restauration gegeben wird.

Die Erfindung wird im Folgenden anhand von sie nicht beschränkenden Beispielen näher erläutert.

### Beispiele

Es wurden insgesamt 12 erfindungsgemäße Gläser und Glaskeramiken mit den in der Tabelle I angegebenen Zusammensetzungen über Erschmelzung entsprechender Ausgangsgläser und anschließende Wärmebehandlungen gemäß Tabelle II zur gesteuerten Keimbildung und Kristallisation hergestellt, wobei sich in Tabelle I die Oxidationsstufen der angegebenen Oxide auf die Oxidationsstufen der zur Erschmelzung der Ausgangsgläser eingesetzten Rohstoffe beziehen. In Tabelle II bedeuten
- T_{g}: Glasübergangstemperatur
- Tₛ und tₛ: angewendete Temperatur und Zeit zum Erschmelzen
- T_{N} und t_{N}: angewendete Temperatur und Zeit für Keimbildung
- T_{C} und t_{C}: angewendete Temperatur und Zeit für Kristallisation
- T_{Sint} und t_{Sint}: angewendete Temperatur und Zeit für Sintern.

### Beispiele 1-10: Verwendung einer reduzierenden Cerverbindung als reduzierendes Mittel

Zur Herstellung von Gläsern und Glaskeramiken unter Verwendung einer Cerverbindung als reduzierendes Mittel wurden zunächst Ausgangsgläser entsprechend den in Tabelle I angegebenen Zusammensetzungen aus einer Mischung üblicher Rohstoffe bei der in Tabelle II angegebenen Temperatur T_{S} für die Dauer t_{S} im Platintiegel erschmolzen, wobei als Rohstoff für den angegebenen Ce₂O₃-Gehalt Cer(III)-acetylacetonat eingesetzt wurde. Durch Eingießen der Ausgangsgläser in Wasser wurden Glasfritten hergestellt, die im Trockenschrank bei 150°C getrocknet wurden.

In den Beispielen 1 bis 8 wurden die getrockneten Glasfritten zur Homogenisierung anschließend ein zweites Mal bei der Temperatur T_{S} für die Dauer t_{S} aufgeschmolzen. Die erhaltenen Glasschmelzen wurden dann in vorgewärmte Graphitformen gegossen, um Glasblöcke zu erzeugen. Die Glasblöcke wurden dann durch thermische Behandlung zu keimhaltigen Gläsern und Glaskeramiken umgewandelt. Die angewendeten thermischen Behandlungen zur gesteuerten Keimbildung und gesteuerten Kristallisation sind in Tabelle II angegeben.

In den Beispielen 9 und 10 wurden die getrockneten Glasfritten in einer Retsch-Mühle auf eine Partikelgröße von <90 µm aufgemahlen. Das Glaspulver wurde zu einem Rohling verpresst und anschliessend gesintert. Der Sinterschritt bewirkte neben der Verdichtung des Materials auch eine Kristallisation des Glases unter Bildung eines dichten Glaskeramikformkörpers. Die angewendete thermische Behandlung für das Sintern ist in Tabelle II angegeben.

### Beispiel 11: Verwendung einer organischen Verbindung als reduzierendes Mittel

Zur Herstellung von Gläsern und Glaskeramiken unter Verwendung einer organischen Verbindung als reduzierendes Mittel wurde zunächst ein Ausgangsglas entsprechend der in Tabelle I angegebenen Zusammensetzung aus einer Mischung üblicher Rohstoffe unter Zusatz von 1,5 Gew.-% Saccharose bei der in Tabelle II angegebenen Temperatur T_{S} für die Dauer t_{S} im Platintiegel erschmolzen. Durch Eingießen des Ausgangsglases in Wasser wurde eine Glasfritte hergestellt, die im Trockenschrank bei 150°C getrocknet und zur Homogenisierung anschließend ein zweites Mal bei der Temperatur T_{S} für die Dauer t_{S} aufgeschmolzen wurde. Die erhaltene Glasschmelze wurde dann in vorgewärmte Graphitformen gegossen, um Glasblöcke zu erzeugen. Die Glasblöcke wurden dann durch thermische Behandlung zu keimhaltigen Gläsern und Glaskeramiken umgewandelt. Die angewendeten thermischen Behandlungen zur gesteuerten Keimbildung und gesteuerten Kristallisation sind in Tabelle II angegeben.

### Beispiel 11a: Wiederholung von Beispiel 11 ohne Zugabe eines reduzierenden Mittels (Vergleich)

Beispiel 11 wurde ohne Zugabe von Saccharose wiederholt. Die Fluoreszenz der so erhaltenen Probe ist viel geringer als bei Beispiel 11.

### Beispiel 12: Verwendung von Formiergas als reduzierendes Mittel

Zur Herstellung von Gläsern und Glaskeramiken unter Verwendung von Formiergas als reduzierendes Mittel wurde zunächst ein Ausgangsglas entsprechend der in Tabelle I angegebenen Zusammensetzung aus einer Mischung üblicher Rohstoffe bei der in Tabelle II angegebenen Temperatur T_{S} für die Dauer t_{S} im Platintiegel erschmolzen. Durch Eingießen des Ausgangsglases in Wasser wurde eine Glasfritte hergestellt, die im Trockenschrank bei 150°C getrocknet wurde. Die getrocknete Glasfritte wurde erneut bei der Temperatur T_{S} aufgeschmolzen und die Glasschmelze für 60 min mittels eines Quarzglas-Tauchrohrs mit etwa 3 l/min Formiergas (95% N₂, 5% H₂) durchströmt. Anschließend wurde das Tauchrohr aus der Schmelze entfernt und die Schmelzoberfläche für etwa 30 min mit Formiergas gespült, um eine Reoxidation zu vermeiden. Die Glasschmelze wurde anschließend in vorgewärmte Stahlformen gegossen, um Glasblöcke zu erzeugen.

Die Glasblöcke wurden dann durch thermische Behandlungen in normaler Ofenatmosphäre zu keimhaltigen Gläsern und Glaskeramiken umgewandelt. Die angewendeten thermischen Behandlungen zur gesteuerten Keimbildung und gesteuerten Kristallisation sind in Tabelle II angegeben. Auswirkungen des Schmelzens unter Formiergas auf die Kristallisation und/oder Gefügeausbildung wurden nicht beobachtet.

### Beispiel 13: Fluoreszenzmessungen

Aus den nach Keimbildung erhaltenen Blöcken wurden mit Hilfe einer geeigneten Säge (Buehler Isomet 5000) Plättchen herausgesägt und die Oberfläche mit einer APEX-Schleifscheibe (0,5 µm) poliert. Die Plättchen wurden daraufhin in einem Heizofen Programat (Ivoclar Vivadent AG) für die Kristallisation einer Temperaturbehandlung gemäß Tabelle II unterzogen. In einem weiteren Bearbeitungsschritt wurden die Plättchen auf die Abmessungen 17,9 mm x 15,9 mm x 2 mm geschliffen und die Oberfläche mit einer APEX-Schleifscheibe (0,5 µm) poliert.

Zur Messung der Fluoreszenzeigenschaften wurde ein Fluoreszenz-Spektrometer vom Typ FL1039 (Horiba Jobin Yvon GmbH) mit einem Anregungsmonochromator und einem Emissionsmonochromator eingesetzt. Die Anregung der Proben erfolgte mittels einer 450 W Xenon-Lampe. Die Emissionsintensität wurde mit einem Photomultiplier-Detektor (PMT) vom Typ PMT 1424M (Horiba Jobin Yvon GmbH) als Impulse pro Sekunde (counts per second, cps) bestimmt. Die Kalibrierung des Anregungsmonochromators wurde mittels einer integrierten Silizium-Photodiode durchgeführt. Der Emissionsmonochromator wurde über die Position des Wasser-Ramanpeaks kalibriert. Die Linearität des Detektors im Messbereich wurde dabei über gerätespezifische Korrekturdateien sichergestellt. Die Linearität der Anregungsintensität wurde bei der Bestimmung der Anregungsspektren über eine mathematische Korrektur der gemessenen Emissionsintensität über die Lampenintensität (Division des gemessenen Signals durch das Referenzsignal der integrierten Silizium-Photodiode, welche direkt die Lampenintensität bestimmt) sichergestellt. Zum Schutz des Detektors und um nicht in den Sättigungsbereich zu gelangen, wurde im Emissionsstrahlengang ein 5% Neutral Density-Filter verwendet.

Die Proben wurden in einen Festkörperprobenhalter im Right-Angle-Modus eingespannt. Zur Vermeidung von Reflexionen des Anregungslichtes wurden die Proben um 30° zum Anregungsstrahl verdreht, so dass nur diffus gestreutes Emissionslicht detektiert wurde.

Alle Proben wurden bei identischen Spektrometereinstellungen (Spaltbreiten 1 nm (Anregungsmonochromator) und 1,5 nm (Emissionsmonochromator), Scanbereich 372 bis 700 nm, Inkrement 1 nm, Integrationszeit 1 s, Anregungswellenlänge 366 nm) vermessen.

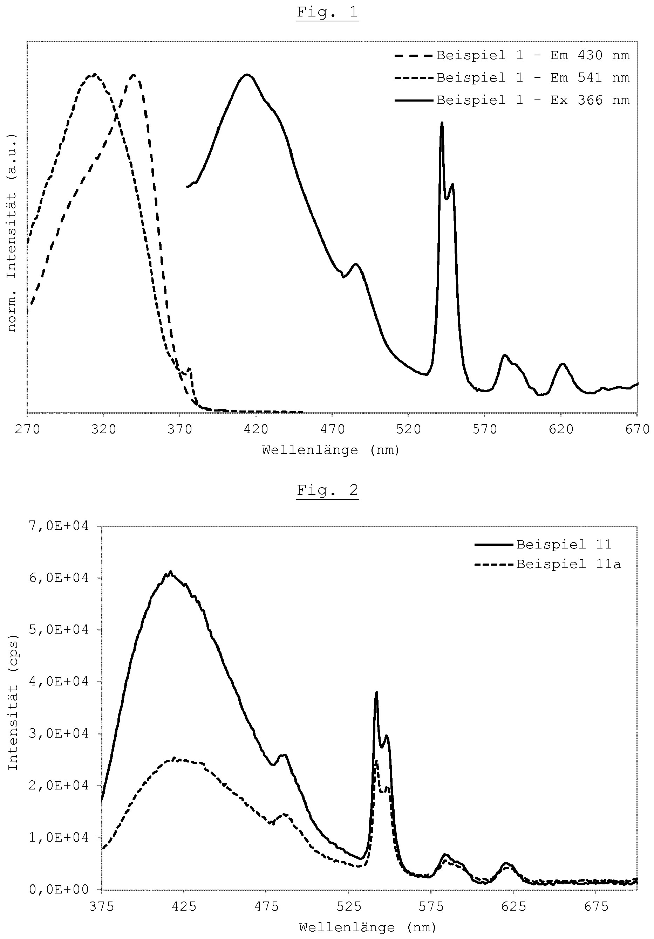

Fig. 1 zeigt für die gemäß Beispiel 1 erhaltene Glaskeramikprobe das Emissionsspektrum bei einer Anregungswellenlänge von 366 nm sowie Anregungsspektren für Emission bei 430 nm und 541 nm. Das Emissionsspektrum zeigte ein breites Maximum bei 420 nm, welches dem 5d → 4f-Übergang von Ce³⁺ zuzuordnen ist. Das entsprechende Anregungsspektrum für Emission bei 430 nm zeigte ein Anregungsmaximum bei 340 nm. Ferner zeigte das Emissionsspektrum Maxima bei 483, 541, 585 und 619 nm welche den Übergängen ⁵D₄ → ⁷F₆, ⁷F₅, ⁷F₄ und ⁷F₃ von Tb³⁺ zuzuordnen sind. Das zugehörige breite Anregungsspektrum für Emission bei 541 nm zeigte ein Anregungsmaximum bei 310 nm. Die im Emissionsspektrum von Fig. 1 gezeigten Fluoreszenzemissionen werden vom menschlichen Auge insgesamt als weiss-blaue Fluoreszenz wahrgenommen.

Fig. 2 zeigt bei einer Anregungswellenlänge von 366 nm erhaltene Emissionsspektren für die Probe gemäß Beispiel 11, die unter reduzierenden Bedingungen durch Zusatz von Saccharose hergestellt wurde, und die entsprechende Referenzprobe gleicher Zusammensetzung gemäß Beispiel 11a, die unter normalen Bedingungen an sauerstoffhaltiger Atmosphäre erschmolzen wurde. Erkennbar sind das breite Emissionsmaximum von Ce³⁺ bei etwa 420 nm und die Emissionsbanden von Tb³⁺ bei 483, 541, 549, 585 und 619 nm. Ein Vergleich der Spektren zeigt einen deutlichen Anstieg der Intensitäten der einzelnen Emissionsbanden durch das Schmelzen unter reduzierenden Bedingungen für die Probe gemäß Beispiel 2. Ein Vergleich der Gesamt-Lichtemission, bestimmt durch Berechnung des Flächenintegrals unter den Emissionskurven über den Bereich von 375 bis 700 nm (gesamter Messbereich), zeigt einen Anstieg um den Faktor 2,0.

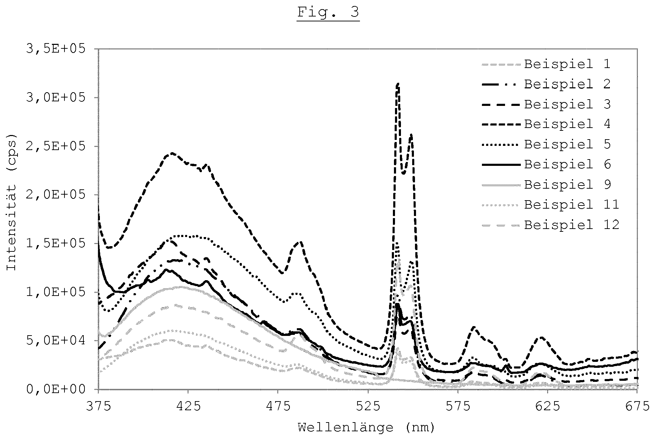

Fig. 3 zeigt die Emissionsintensitäten der Proben gemäß Beispielen 1-6, 9, 11 und 12.

**Tabelle I**

| **Beispiel** | **1** | **2** | **3** | **4** | **5** | **6** | **7** | **8** | **9** | **10** | **11** | **12** |
|---|---|---|---|---|---|---|---|---|---|---|---|---|
| Zusammensetzung | Gew.-% | Gew.-% | Gew.-% | Gew.-% | Gew.-% | Gew.-% | Gew.-% | Gew.-% | Gew.-% | Gew.-% | Gew. % | Gew.-% |
| SiO₂ | 74,7 | 72,9 | 71,0 | 71,2 | 72,6 | 70,8 | 78,3 | 85,5 | 77,4 | 60,9 | 74,3 | 75,1 |
| Li₂O | 7,6 | 7,7 | 7,1 | 7,0 | 6, 6 | 6,8 | 6,8 | 9,0 | 7,6 | 3,6 | 7,7 | 9,2 |
| Na₂O | - | - | - | - | - | - | - | - | - | 0,5 | - | 2,2 |
| K₂O | 3,4 | 3,5 | 3,6 | 3,2 | 2,3 | 3,2 | 2,0 | - | 3,4 | 3,6 | 3,4 | - |
| Cs₂O | - | - | - | - | 4,9 | - | - | - | - | - | - | - |
| MgO | 1,8 | 1,8 | 2,2 | 4,1 | 0,6 | 1,7 | 1,5 | - | 1,8 | 2,9 | 1,8 | 3,1 |
| CaO | 3,3 | 3,3 | 3,7 | - | - | 2,9 | 2,8 | - | 3,3 | 2,6 | 3,3 | |
| SrO | - | - | - | - | 4,0 | - | - | - | - | - | - | - |
| ZnO | - | - | - | 3,3 | | - | - | - | - | - | - | - |
| Al₂O₃ | 3,8 | 4,1 | 5, 6 | 3,7 | 2,6 | 3,3 | 2,0 | - | 3,7 | 4,2 | 4,0 | 3,8 |
| Y₂O₃ | - | - | - | - | - | 3,3 | - | - | - | - | - | - |
| La₂O₃ | - | - | - | - | - | 1,6 | - | - | - | - | - | - |
| GeO₂ | - | - | - | - | - | - | - | - | - | 15,1 | - | - |
| TiO₂ | - | - | - | - | - | - | 0,2 | - | - | - | - | - |
| ZrO₂ | - | - | - | 1,0 | - | - | 2,0 | - | - | - | - | - |
| Ce₂O₃* | 1,4 | 1,7 | 2,7 | 2,8 | 2,6 | 1,9 | 1,5 | 1,9 | 2,8 | 2,0 | - | - |
| CeO₂ | - | 0,9 | - | - | - | - | - | - | - | - | 1,5 | 1,5 |
| P₂O₅ | 3,6 | 3,6 | 3,7 | 3,3 | 3,4 | 3,4 | 2,8 | 3,2 | - | 4,3 | 3,6 | 4,7 |
| V₂O₅ | - | 0,1 | - | - | - | - | - | - | - | - | - | - |
| Ta₂O₅ | - | - | - | | | 0,7 | - | - | - | - | - | - |
| Tb₄O₇ | 0,4 | 0,4 | 0,4 | 0,4 | 0,4 | 0,4 | - | 0,4 | - | 0,3 | 0,4 | 0,4 |
| F | - | - | - | - | - | - | 0,1 | - | - | - | - | - |

| | | | | | | | | | | | | |
|---|---|---|---|---|---|---|---|---|---|---|---|---|
| * eingesetzt als Cer(III)-acetylacetonat | | | | | | | | | | | | |

**Tabelle II**

| **Beispiel** | **1** | **2** | **3** | **4** | **5** | **6** | **7** | **8** | **9** | **10** | **11** | **12** |
|---|---|---|---|---|---|---|---|---|---|---|---|---|
| T_{g}/°C | 487 | 469 | 505 | 504 | 488 | 495 | 494 | - | 482 | 464 | 506 | 473 |
| T_{S}/°C | 1650 | 1650 | 1650 | 1650 | 1680 | 1680 | 1650 | 1680 | 1650 | 1680 | 1650 | 1600 |
| T_{S/}min | 120 | 120 | 120 | 120 | 120 | 120 | 120 | 120 | 180 | 120 | 60 | 120 |
| T_{N}/°C | 520 | 520 | 530 | 520 | 510 | 520 | 510 | 530 | - | - | 530 | 490 |
| T_{N}/min | 30 | 30 | 30 | 30 | 60 | 20 | 30 | 30 | - | - | 30 | 60 |
| T_{C}/°C | 800 | 800 | 800 | 810 | 830 | 860 | 760 | 900 | - | - | 800 | 740 |
| T_{C}/min | 30 | 30 | 30 | 30 | 30 | 10 | 30 | 30 | - | - | 30 | 30 |
| T_{Sint}/°C | - | - | - | - | - | - | - | - | 890 | 920 | - | - |
| t_{Sint}/min | - | - | - | - | - | - | - | - | 15 | 15 | - | - |
| Hauptkristallphase | Tiefquarz | Tiefquarz | Cristobalit | Cristobalit | Tiefquarz | Cristobalit | Tiefquarz | Tiefquarz | Tiefquarz | Tiefquarz | Tiefquarz | Tiefquarz |
| Nebenkristallphase | Li₂Si₂O₅ Li₃PO₄ | Li₂Si₂O₅ Li₃PO₄ | Li₂Si₂O₅ Tridymit | Li₃PO₄ | CsAlSi₅O₁₂ Li₃PO₄ Li₂Si₂O₅ Tridymit | Li₃PO₄ SiO₂ | Li₂Si₂O₅ Li₃PO₄ | Li₃PO₄ Li₂Si₂O₅ | Li₂Si₂O₅ | Li₃PO₄ Cristobalit Li₃PO₄ Diopsid | Li₂Si₂O₅ Li₃PO₄ | Li₂Si₂O₅ Li₃PO₄ |

## Patentansprüche

1. Verfahren zur Herstellung einer Glaskeramik mit SiO₂ als Hauptkristallphase oder eines Glases, das Keime für die Kristallisation von SiO₂ enthält, welches einen Schritt umfasst, bei dem eine Schmelze eines Ausgangsglases, das Cer-Ionen enthält, reduzierenden Bedingungen ausgesetzt wird.

2. Verfahren nach Anspruch 1, bei dem die Schmelze des Ausgangsglases mit mindestens einem reduzierenden Mittel umgesetzt wird.

3. Verfahren nach Anspruch 2, bei dem die Schmelze des Ausgangsglases aus einer glasbildenden Zusammensetzung gebildet wird, die SiO₂, Li₂O, eine Cerverbindung und mindestens ein reduzierendes Mittel enthält.

4. Verfahren nach Anspruch 2 oder 3, bei dem das mindestens eine reduzierende Mittel eine Verbindung ist, die mindestens ein oxidierbares Kohlenstoffatom enthält und vorzugsweise aus der Gruppe bestehend aus organischen Salzen, Kohlenhydraten und Getreidemehlen ausgewählt ist.

5. Verfahren nach Anspruch 4, bei dem das mindestens eine reduzierende Mittel ein Acetylacetonat, insbesondere ein Ceracetylacetonat und bevorzugt Cer(III)-acetylacetonat ist.

6. Verfahren nach Anspruch 2, bei dem das mindestens eine reduzierende Mittel ein reduzierendes Gas ist, wobei das Gas vorzugsweise Wasserstoff enthält und bevorzugt Wasserstoff und Stickstoff enthält.

7. Verfahren nach einem der Ansprüche 1 bis 6, bei dem das Ausgangsglas 0,1 bis 7,0 Gew.-%, insbesondere 0,5 bis 5,0 Gew.-% und bevorzugt 1,0 bis 4,0 Gew.-% Cer-Ionen, berechnet als CeO₂, enthält.

8. Verfahren nach einem der Ansprüche 1 bis 7, bei dem das Ausgangsglas ferner Terbium-Ionen und vorzugsweise 0,05 bis 2,0, insbesondere 0,1 bis 1,5, bevorzugt 0,2 bis 1,0 und besonders bevorzugt 0,3 bis 0,7 Gew.-% Terbium-Ionen, berechnet als Tb₄O₇, enthält.

9. Verfahren nach einem der Ansprüche 1 bis 8, bei dem das Ausgangsglas 0 bis 11,0 Gew.-% und insbesondere 1,0 bis 7,0 Gew.-% Erdalkalimetalloxid enthält, wobei das Erdalkalimetalloxid insbesondere MgO, CaO, SrO, BaO oder eine Mischung davon ist.

10. Verfahren nach einem der Ansprüche 1 bis 8, bei dem das Ausgangsglas mindestens eine und bevorzugt alle der folgenden Komponenten in den angegebenen Mengen enthält:
| Komponente | Gew.-% |
|---|---|
| SiO₂ | 58,0 bis 92,0 |
| Li₂O | 2, 0 bis 10, 0 |
| CeO₂ | 0,1 bis 7,0 |
| Tb₄O₇ | 0 bis 2,0 |
| Me^{I}₂O | 0 bis 13,0 |
| Me^{II}O | 0 bis 11,0 |
| Me^{III}₂O₃ | 0 bis 10, 0 |
| Me^{IV}O₂ | 0 bis 21,0 |
| P₂O₅ | 0 bis 7,0 |
| Me^{V}₂O₅ | 0 bis 6,0 |
| Me^{VI}O₃ | 0 bis 6,0 |
| Fluor | 0 bis 5,0, |
wobei
Me^{I}₂O ausgewählt ist aus Na₂O, K₂O, Rb₂O und/oder Cs₂O,
Me^{II}O ausgewählt ist aus MgO, CaO, SrO und/oder ZnO,
Me^{III}₂O₃ ausgewählt ist aus Al₂O₃, B₂O₃, Y₂O₃, La₂O₃, Ga₂O₃ und/
oder In₂O₃,
Me^{IV}O₂ ausgewählt ist aus ZrO₂, GeO₂, TiO₂ und/oder SnO₂,
Me^{V}₂O₅ ausgewählt ist aus V₂O₅, Ta₂O₅und/oder Nb₂O₅ und
Me^{VI}O₃ ausgewählt ist aus WO₃ und/oder MoO₃.

11. Verfahren nach einem der Ansprüche 1 bis 10 zur Herstellung eines Glases mit Keimen, die zur Ausbildung von SiO₂, insbesondere von Tiefquarz, Cristobalit oder einer Mischung von diesen, bevorzugt Tiefquarz oder Cristobalit und besonders bevorzugt Tiefquarz geeignet sind.

12. Verfahren nach einem der Ansprüche 1 bis 10 zur Herstellung einer Glaskeramik, die SiO₂, insbesondere Tiefquarz, Cristobalit oder eine Mischung von diesen, bevorzugt Tiefquarz oder Cristobalit und besonders bevorzugt Tiefquarz als Hauptkristallphase aufweist.

13. Verfahren nach einem der Ansprüche 1 bis 10 oder 12 zur Herstellung einer Glaskeramik, die 5,0 bis 50,0 und insbesondere 10, 0 bis 30,0 Gew.-% SiO₂ als Kristallphase, insbesondere in Form von Tiefquarz, Cristobalit oder Mischungen von diesen, enthält.

14. Verfahren nach einem der Ansprüche 1 bis 13, bei dem das Ausgangsglas mindestens einer Wärmebehandlung im Bereich von 700 bis 950°C unterzogen wird.

15. Verfahren nach einem der Ansprüche 1 bis 14, bei dem die Glaskeramik oder das Glas in Form eines Pulvers, eines Rohlings oder einer dentalen Restauration vorliegen.

16. Glaskeramik mit SiO₂ als Hauptkristallphase oder Glas, das Keime für die Kristallisation von SiO₂ enthält, die nach dem Verfahren gemäß einem der Ansprüche 1 bis 15 erhältlich sind.

17. Glaskeramik oder Glas nach Anspruch 16, die eine Fluoreszenzintensität bei 420 nm aufweisen, die mindestens das 1,5-fache, insbesondere mindestens das 2-fache, bevorzugt mindestens das 4-fache, besonders bevorzugt mindestens das 6-fache, der entsprechenden Fluoreszenzintensität einer Referenzprobe beträgt,
wobei die Referenzprobe dadurch erhältlich ist, dass ein Ausgangsglas mit der Zusammensetzung 74,3 Gew.-% SiO₂, 7,7 Gew.-% Li₂O, 3,4 Gew.-% K₂O, 1,8 Gew.-% MgO, 3,3 Gew.-% CaO, 4,0 Gew.-% Al₂O₃, 3,6 Gew.-% P₂O₅, 1,5 Gew.-% CeO₂ und 0,4 Gew.-% Tb₄O₇ im 200 g Maßstab aus geeigneten Rohstoffen in einem Platin-Rhodium-Tiegel bei 1650°C für 1 h erschmolzen wird, 30 g der Glasschmelze in eine vorgewärmte Form gegossen werden, um einen Glasblock zu erzeugen, und der Glasblock durch aufeinanderfolgende Temperaturbehandlungen bei 530°C für 20 min und 800°C für 30 min in eine Glaskeramik umgewandelt wird, wobei die Aufheizraten zwischen den Temperaturbehandlungen jeweils 30 K/min betragen.

18. Glaskeramik oder Glas nach Anspruch 16, die eine Fluoreszenzintensität bei 541 nm aufweisen, die mindestens das 1,5-fache, insbesondere mindestens das 2-fache, bevorzugt mindestens das 3-fache, besonders bevorzugt mindestens das 4-fache, der entsprechenden Fluoreszenzintensität einer Referenzprobe beträgt,
wobei die Referenzprobe wie in Anspruch 17 erhältlich ist.

19. Verwendung der Glaskeramik oder des Glases nach einem der Ansprüche 16 bis 18 als Dentalmaterial und insbesondere zur Herstellung dentaler Restaurationen.

20. Verwendung nach Anspruch 19, bei der die Glaskeramik oder das Glas durch Verpressen oder maschinelle Bearbeitung zur gewünschten dentalen Restauration, insbesondere Inlay, Onlay, Veneer, Teilkrone, Krone oder Schale, verformt werden.

## Claims

1. Method for preparation of a glass ceramic with SiO₂ as main crystal phase or a glass comprising nuclei for the crystallization of SiO₂, which comprises a step in which a melt of a starting glass comprising cerium ions is subjected to reducing conditions.

2. Method according to claim 1, in which the melt of the starting glass is reacted with at least one reducing agent.

3. Method according to claim 2, in which the melt of the starting glass is formed from a glass-forming composition comprising SiO₂, Li₂O, a cerium compound and at least one reducing agent.

4. Method according to claim 2 or 3, in which the at least one reducing agent is a compound comprising at least one oxidizable carbon atom and is preferably selected from the group consisting of organic salts, carbohydrates and cereal flours.

5. Method according to claim 4, in which the at least one reducing agent is an acetylacetonate, in particular a cerium acetylacetonate and preferably cerium(III) acetylacetonate.

6. Method according to claim 2, in which the at least one reducing agent is a reducing gas, wherein the gas preferably comprises hydrogen and preferably comprises hydrogen and nitrogen.

7. Method according to any one of claims 1 to 6, in which the starting glass comprises 0.1 to 7.0 wt.-%, in particular 0.5 to 5.0 wt.-% and preferably 1.0 to 4.0 wt.-% cerium ions, calculated as CeO₂.

8. Method according to any one of claims 1 to 7, in which the starting glass further comprises terbium ions and preferably 0.05 to 2.0, in particular 0.1 to 1.5, preferably 0.2 to 1.0 and particularly preferably 0.3 to 0.7 wt.-% terbium ions, calculated as Tb₄O₇.

9. Method according to any one of claims 1 to 8, in which the starting glass comprises 0 to 11.0 wt.-% and in particular 1.0 to 7.0 wt.-% alkaline earth metal oxide, wherein the alkaline earth metal oxide is in particular MgO, CaO, SrO, BaO or a mixture thereof.

10. Method according to any one of claims 1 to 8, in which the starting glass comprises at least one and preferably all of the following components in the given amounts:
| Component | wt.-% |
|---|---|
| SiO₂ | 58.0 to 92.0 |
| Li₂O | 2.0 to 10.0 |
| CeO₂ | 0.1 to 7.0 |
| Tb₄O₇ | 0 to 2.0 |
| Me^{I}₂O | 0 to 13.0 |
| ME^{II}O | 0 to 11.0 |
| Me^{III}₂O₃ | 0 to 10.0 |
| Me^{IV}O₂ | 0 to 21.0 |
| P₂O₅ | 0 to 7.0 |
| Me^{V}₂O₅ | 0 to 6.0 |
| Me^{VI}O₃ | 0 to 6.0 |
| fluorine | 0 to 5.0, |
wherein
Me^{I}₂O is selected from Na₂O, K₂O, Rb₂O and/or Cs₂O,
Me^{II}O is selected from MgO, CaO, SrO and/or ZnO,
Me^{III}₂O₃ is selected from Al₂O₃, B₂O₃, Y₂O₃, La₂O₃, Ga₂O₃ and/or In₂O₃,
Me^{IV}O₂ is selected from ZrO₂, GeO₂, TiO₂ and/or SnO₂,
Me^{V}₂O₅ is selected from V₂O₅, Ta₂O₅ and/or Nb₂O₅ and
Me^{VI}O₃ is selected from WO₃ and/or MoO₃.

11. Method according to any one of claims 1 to 10 for the preparation of a glass with nuclei which are suitable for forming SiO₂, in particular low quartz, cristobalite or a mixture thereof, preferably low quartz or cristobalite and particularly preferably low quartz.

12. Method according to any one of claims 1 to 10 for preparation of a glass ceramic which has SiO₂, in particular low quartz, cristobalite or a mixture thereof, preferably low quartz or cristobalite and particularly preferably low quartz, as main crystal phase.

13. Method according to any one of claims 1 to 10 or 12 for the preparation of a glass ceramic which comprises 5.0 to 50.0 and in particular 10.0 to 30.0 wt.-% SiO₂ as crystal phase, in particular in the form of low quartz, cristobalite or mixtures thereof.

14. Method according to any one of claims 1 to 13, in which the starting glass is subjected to at least one heat treatment in the range of from 700° to 950°C.

15. Method according to any one of claims 1 to 14, in which the glass ceramic or the glass are present in the form of a powder, a blank or a dental restoration.

16. Glass ceramic with SiO₂ as main crystal phase or glass comprising nuclei for the crystallization of SiO₂, which are obtainable by the method according to any one of claims 1 to 15.

17. Glass ceramic or glass according to claim 16, which have a fluorescence intensity at 420 nm which is at least 1.5 times, in particular at least 2 times, preferably at least 4 times, particularly preferably at least 6 times, the corresponding fluorescence intensity of a reference sample,
wherein the reference sample is obtainable by melting a starting glass with the composition: 74.3 wt.-% SiO₂, 7.7 wt.-% Li₂O, 3.4 wt.-% K₂O, 1.8 wt.-% MgO, 3.3 wt.-% CaO, 4.0 wt.-% Al₂O₃, 3.6 wt.-% P₂O₅, 1.5 wt.-% CeO₂ and 0.4 wt.-% Tb₄O₇ on a scale of 200 g from suitable raw materials in a platinum-rhodium crucible at 1650°C for 1 h, pouring 30 g of the glass melt into a pre-heated mould in order to produce a glass block, and converting the glass block into a glass ceramic by successive temperature treatments at 530°C for 20 min and 800°C for 30 min, wherein the heating rates between the temperature treatments are 30 K/min in each case.

18. Glass ceramic or glass according to claim 16, which have a fluorescence intensity at 541 nm which is at least 1.5 times, in particular at least 2 times, preferably at least 3 times, particularly preferably at least 4 times, the corresponding fluorescence intensity of a reference sample,
wherein the reference sample is obtainable as in claim 17.

19. Use of the glass ceramic or the glass according to any one of claims 16 to 18 as dental material and in particular for the preparation of dental restorations.

20. Use according to claim 19, in which the glass ceramic or the glass are shaped by pressing or machining to form the desired dental restoration, in particular inlay, onlay, veneer, partial crown, crown or facet.

## Revendications

1. Procédé pour la fabrication d'une vitrocéramique avec du SiO₂ en tant que phase cristalline principale ou d'un verre, qui renferme des germes pour la cristallisation du SiO₂, lequel comprend une étape, où une matière fondue d'un verre de départ, qui renferme des ions cérium, est exposée à des conditions de réduction.

2. Procédé selon la revendication 1, où la matière fondue du verre de départ est soumise à au moins un agent de réduction.

3. Procédé selon la revendication 2, où la matière fondue du verre de départ est formée à partir d'une composition de formation de verre, qui renferme du SiO₂, du Li₂O, un composé cérium et au moins un agent de réduction.

4. Procédé selon la revendication 2 ou 3, où l'au moins un agent de réduction est un composé qui renferme au moins un atome de carbone oxydable et est choisi de préférence parmi le groupe constitué de sels organiques, d'hydrates de carbone et de farines de céréales.

5. Procédé selon la revendication 4, où l'au moins un agent de réduction est un acétylacétonate, en particulier un acétylacétonate de cérium et de manière préférée un acétylacétonate de cérium (III).

6. Procédé selon la revendication 2, où l'au moins un agent de réduction est un gaz de réduction, dans lequel le gaz renferme de préférence de l'hydrogène et renferme de manière préférée de l'hydrogène et de l'azote.

7. Procédé selon l'une quelconque des revendications 1 à 6, où le verre de départ renferme 0,1 à 7,0 % en poids, en particulier 0,5 à 5,0 % en poids et de manière préférée 1,0 à 4,0 % en poids d'ions cérium, calculés en tant que CeO₂.

8. Procédé selon l'une quelconque des revendications 1 à 7, où le verre de départ renferme en outre des ions terbium, et de préférence 0,05 à 2,0, en particulier 0,1 à 1,5, de manière préférée 0,2 à 1,0 et de manière particulièrement préférée 0,3 à 0,7 % en poids d'ions terbium, calculés en tant que Tb₄O₇.

9. Procédé selon l'une quelconque des revendications 1 à 8, où le verre de départ renferme 0 à 11,0 % en poids et en particulier 1,0 à 7,0 % en poids d'oxyde de métal alcalino-terreux, dans lequel l'oxyde de métal alcalino-terreux est du MgO, du CaO, du SrO, du BaO ou un mélange de ceux-ci.

10. Procédé selon l'une quelconque des revendications 1 à 8, où le verre de départ renferme au moins un et de manière préférée tous les composants suivants dans les quantités indiquées :
| Composants | % en poids |
|---|---|
| SiO₂ | 58,0 à 92,0 |
| Li₂O | 2,0 à 10,0 |
| CeO₂ | 0,1 à 7,0 |
| Tb₄O₇ | 0 à 2,0 |
| Me^{I}₂O | 0 à 13,0 |
| Me^{II}O | 0 à 11,0 |
| Me^{III}₂O₃ | 0 à 10, 0 |
| Me^{IV}O₂ | 0 à 21,0 |
| P₂O₅ | 0 à 7,0 |
| Me^{V}₂O₅ | 0 à 6,0 |
| Me^{VI}O₃ | 0 à 6,0 |
| Fluor | 0 à 5,0 |
dans lequel
le Me^{I}₂O est choisi parmi Na₂O, K₂O, Rb₂O et/ou Cs₂O,
Me^{II}O est choisi parmi MgO, CaO, SrO et/ou ZnO,
Me^{III}₂O est choisi parmi Al₂O₃, B₂O₃, Y₂O₃, La₂O₃, Ga₂O₃ et/ou In₂O₃,
Me^{IV}O₂ est choisi parmi ZrO₂, GeO₂, TiO₂ et/ou SnO₂,
Me^{V}₂O₅ est choisi parmi V₂O₅, Ta₂O₅ et/ou Nb₂O₅ et
Me^{VI}O₃ est choisi parmi WO₃ et/ou MoO₃.

11. Procédé selon l'une quelconque des revendications 1 à 10 pour la fabrication d'un verre avec des germes, qui sont adaptés pour la réalisation de SiO₂, en particulier de quartz alpha, de cristobalite ou d'un mélange de ceux-ci, de manière préférée de quartz alpha et de cristobalite et de manière particulièrement préférée de quartz alpha.

12. Procédé selon l'une quelconque des revendications 1 à 10 pour la fabrication d'une vitrocéramique, qui présente du SiO₂, en particulier du quartz alpha, de la cristobalite ou un mélange de ceux-ci, de manière préférée du quartz alpha ou de la cristobalite, et de manière particulièrement préférée de quartz alpha en tant que phase cristalline principale.

13. Procédé selon l'une quelconque des revendications 1 à 10 ou 12 pour la fabrication d'une vitrocéramique, qui renferme 5,0 à 50,0 et en particulier 10, 0 à 30,0 % en poids de SiO₂ en tant que phase cristalline, en particulier sous la forme de quartz alpha, de cristobalite ou de mélanges de ceux-ci.

14. Procédé selon l'une quelconque des revendications 1 à 13, où le verre de départ est soumis à au moins un traitement thermique dans la plage de 700 à 950 °C.

15. Procédé selon l'une quelconque des revendications 1 à 14, où la vitrocéramique ou le verre sont présents sous la forme d'une poudre, d'une ébauche ou d'une restauration dentaire.

16. Vitrocéramique avec du SiO₂ en tant que phase cristalline principale ou du verre, qui renferme des germes pour la cristallisation du SiO₂, qui peuvent être obtenus selon le procédé selon l'une quelconque des revendications 1 à 15.

17. Vitrocéramique ou verre selon la revendication 16, qui présentent une intensité de fluorescence de l'ordre de 420 nm, qui est égale à au moins 1,5 fois, en particulier à au moins 2 fois, de manière préférée à au moins 4 fois, de manière particulièrement préférée à au moins 6 fois, l'intensité de fluorescence correspondante d'un échantillon de référence,
dans laquelle ou lequel l'échantillon de référence peut être obtenu en ce qu'un verre de départ est fondu à 1650 °C pendant 1 h dans un creuset de platine et de rhodium avec la composition 74,3 % en poids de SiO₂, 7,7 % en poids de Li₂O, 3,4 % en poids de K₂O, 1,8 % en poids de MgO, 3,3 % en poids de CaO, 4,0 % en poids de Al₂O₃, 3,6 % en poids de P₂O₅, 1,5 % en poids de CeO₂ et 0,4 % en poids de Tb₄O₇ à l'échelle de 200 g à partir de matières premières adaptées, 30 g de la matière fondue de verre sont coulés dans un moule préchauffé pour produire un bloc en verre, et le bloc en verre est transformé en une vitrocéramique par des traitements thermiques successifs à 530 °C pendant 20 min et à 800 °C pendant 30 min, dans lequel les vitesses de montée en température entre les traitements thermiques sont respectivement de 30 K/min.

18. Vitrocéramique ou verre selon la revendication 16, qui présentent une intensité de fluorescence de l'ordre de 541 nm, qui est égale à au moins 1,5 fois, en particulier à au moins 2 fois, de manière préférée à au moins 3 fois, de manière particulièrement préférée à au moins 4 fois, l'intensité de fluorescence correspondante d'un échantillon de référence,
dans laquelle ou lequel l'échantillon de référence peut être obtenu comme dans la revendication 17.

19. Utilisation de la vitrocéramique ou du verre selon l'une quelconque des revendications 16 à 18 en tant que matériau dentaire et en particulier pour la fabrication de restaurations dentaires.

20. Utilisation selon la revendication 19, où la vitrocéramique ou le verre sont déformés par compression ou par usinage mécanique en la restauration dentaire souhaitée, en particulier en inlay, onlay, facette, couronne partielle, couronne ou coque.
